## Europäisches Patentamt

## European Patent Office

## Office européen des brevets

(11) Publication number: **0 366 168**
**A1**

## (12) EUROPEAN PATENT APPLICATION

(21) Application number: 89202376.3

(22) Date of filing: 21.09.89

(51) Int. Cl.⁵: **B05D 7/20 , C08L 51/06 ,
F16L 58/10**

(30) Priority: 03.10.88 GB 8823194

(43) Date of publication of application:
02.05.90 Bulletin 90/18

(84) Designated Contracting States:
ES

(71) Applicant: **DOW BENELUX N.V.
Aert van Nesstraat 45
NL-3012 CA Rotterdam(NL)**

(72) Inventor: **Vanharen, Joannes Clement Gerard
Churchillaan 686
NL-4532 JB Terneuzen(NL)**

(54) Process for field coating pipe.

(57) An improved process for field coating pipe wherein a particulate olefin polymer resin coating composition is employed to provide field coatings having improved combinations of properties with a labor and time saving process. The olefin polymer resin coating composition comprises an adhesive olefin copolymer having succinic acid or anhydride groups along the polymer molecule backbone. The coatings possess excellent combinations of chemical and moisture resistance, physical and adhesive strength even at elevated temperatures and resistance to cathodic disbonding.

EP 0 366 168 A1

## PROCESS FOR FIELD COATING PIPE

This invention relates to a process for coating pipe in the field, i.e., at or near the point where the pipe is to be installed. It can be utilized in the coating of pipes which, after being in service for a period of time, need to have the previous coating material removed and a new coating material applied and is especially suited for field coating the areas around welded pipe joints and any defects in a previously applied pipe coating.

As is well known, pipes made from steel, iron and the like are employed to construct underground or underwater pipelines for carrying a vast number of different fluids or slurries in many different types of environments. Very high expenses must be incurred in association with their installation, surveillance, maintenance, and cathodic protection, not to mention the inherent danger and expense associated with damaged or broken pipelines. A number of different methods are therefore employed to protect the steel pipe from mechanical and chemical damage before, during and after its installation.

The primary protection for this steel pipe is initially provided by either a factory-applied ("mill") coating that is applied to the individual sections of pipe or a ditch-applied ("over-the-ditch") coating that is applied to an entire pipeline after welding the individual sections together and immediately before laying. In the case of ditch-applied coatings, molten coal tar or the like is applied over the pipe (usually with a protective fabric covering) or adhesive plastic tapes are spirally wound onto the pipe. In general these coatings provide very inferior performance and especially in the areas of adhesive strength and resistance to corrosion.

In the case of mill coating, thick outer protective layers are generally applied by extruding a sheet of molten thermoplastic onto the heated pipe or sinter coating the heated pipe with a gravity fed or fluidized thermoplastic resin powder or the like. A mill coating usually, but not always, comprises a primer layer of epoxy resin which is applied to the cleaned and heated steel pipe. The epoxy primer can be applied in a number of ways and generally adheres quite well to the clean metal. Usually the epoxy resin coating is about 0.02 to 0.1 millimeters thick. This layer functions primarily as protection against cathodic disbonding as well as being a substrate to which a thicker protective thermoplastic resin coating can be adhered using an intermediate adhesive layer.

The application of mill coatings of this type and the use of various materials for their preparation is well-known. See, for example, German Patent 19 65 802, U.S. Defensive Publication T 973,015, US patent 4,048,355, Japanese Patent Publication 58-168628, British Patent 1,542,333 and US patent 4,550,004. With the available equipment and controlled application conditions, it is possible to apply mill coatings with good adhesion to the pipe as well as very good combinations of physical properties.

In the past, field coatings have been applied to joints or relatively small areas of pipe by using a sleeve, sheet or tape of thermoplastic coating material which is placed in contact with the area desired to be coated and heated sufficiently to melt-plastify the thermoplastic and adhere it to the pipe and any existing coating. A layer of epoxy resin primer and/or supplemental adhesive resin was typically used. See for example US patent 4,455,004 and Raychem publication entitled: "HLPT (TM) Heat-Shrinkable Pipeline Sleeves". There are, however, a number of disadvantages associated with these types of systems, including primarily the poor coating which typically results along with the labor intensive application process and the unacceptable long application time. As a result, the field coated portions have commonly been found to be very costly to apply and yet are the weak link in the pipeline coatings due to poor adhesion, poor resistance to cathodic disbonding effects and low softening temperatures.

There are currently many situations in which all or a part of a steel pipe needs to be coated at or near the location where the pipe is being installed (i.e., field coating) and the coating needs to perform substantially better than the ditch-applied coal tar of plastic tapes and sleeves that are currently used for field coatings. It is also necessary to avoid the environmental and safety problems associated with applying molten coal tar and similar materials.

It has now been recognized that in cases where pipes require field coating, a system is needed wherein a number of usually incompatible physical property requirements are met. Good adhesion must be achieved not only to the steel pipe but also to any portions of the existing mill coating which are necessarily overlapped to completely seal a hole or gap. In these situations it would be desirable to achieve a level of heat resistance equivalent to that of the mill coating. Otherwise, the service temperature of the entire pipeline is limited by the coating system that has been applied to such holes or gaps. It is always critical to maintain good resistance to cathodic disbonding. To further complicate the situation, the equipment and materials must be suited for application and high performance at remote locations and under a broad range of temperature and climatic conditions.

It is an object of the present invention to provide an improved process for field coating pipe and simultaneously provide improved field coated pipes and pipe coatings.

These and other objectives are achieved in a process for field coating pipe by applying a thermoplastic resin to the exterior of a pipe to form a coating, characterized in that as thermoplastic resin a particulate olefin polymer resin coating composition comprising an adhesive olefin polymer having succinic acid or anhydride groups along the adhesive olefin polymer molecule backbone, is applied to the heated pipe. According to another aspect the invention relates to an improved field coating and an improved coated pipe obtained according to the process of this invention.

The present invention can apply to the field coating of existing pipelines which, because of damage to the original coating, need to be removed for replacement of the existing coating. This invention is most preferably applicable to field coating the gaps or holes in the mill coatings, which gaps or holes result from partial removal of the mill coating for girth welding purposes or due to damage during transportation, installation and/or service of the coated pipe. Based upon the combination of the olefin polymer resin coating composition and the application process and conditions, the resulting field coating has uniformly excellent adhesion to the pipe and superior physical properties while being more economical in application time and labor than the currently available field pipe coating systems. In terms of the adhesion properties and physical properties of the coating, it should also be noted that a further surprising benefit of the invention is that, when used to coat the gaps or holes in the existing pipe coating, there is simultaneous adhesion to the pipe and the overlapped portions of the commonly used pipe mill-coating materials.

In general the present invention will apply to steel or iron pipe such as that which is commonly used to transport oil, gas, water, and the like over long distances underground or underwater. Such pipes are typically subject to corrosion and are therefore provided with protective exterior coatings and connected to a negative electrical potential to provide cathodic protection. It has been found that the process of the present invention may be applied to, and provides coatings which are suitable for use on, pipes which will operate in the normal range of service temperatures and in particular to such pipes which are operated at relatively high service temperatures, such as 50°C up to 90°C, especially pipes with a service temperature over 60°C.

The present invention has been developed to apply a high performance pipe coating in the field. This includes situations where the coating of an existing pipeline needs to be at least partially replaced. The present invention offers even more surprising results when used to provide coatings over areas bordered by existing pipe coating such as gaps or holes in the existing mill coating of a pipe or pipeline. As used herein the gaps or holes can range in size and shape from a "hole" of a few square centimeters to a "gap" which occurs when the mill coating is not present around the entire circumference of the pipe for distances up to many meters. Such holes typically result from unintentional defects in or damage to the mill coating during production, transportation, installation or service. The gaps typically result from the intentional removal or deletion of the mill coating over a length of the pipe where the ends of two separate pipe sections have to be welded together (i.e., "girth welds").

One of the key aspects of the present invention is the use of the olefin polymer resin coating composition in particulate form to coat pipes in the field. These resin compositions are generally known in the art and comprise an adhesive olefin polymer having succinic acid or anhydride groups along the adhesive olefin polymer molecule backbone. The preparation of suitable adhesive polymer resins which may be used in the process according to the invention is taught, for example, in US patents 3,873,643; 4,087,587; 4,416,944; 4,230,830; 4,684,576; 4,010,223; and 4,026,967.

In general, the adhesive olefin polymer has copolymerized therein or, preferably, grafted thereto maleic acid or anhydride or other monomeric unit which results in the prescribed succinic acid or anhydride groups along the backbone of the adhesive olefin polymer molecule. The base polymer in which the acid or anhydride groups are copolymerized or to which they are grafted is selected based upon a number of considerations such as: (a) the heat resistance desired in the final coating material, (b) compatibility with any other olefin polymer resin(s) with which it may be blended to produce the coating material, and (c) compatibility with the existing mill coating, if any, in situations where the coating material is used to coat holes or gaps in an existing mill coating. High density polyethylene (HDPE) has been found to provide very suitable base resins for the preparation of maleic anhydride or acid grafted adhesive resins. In order to achieve other desirable processing or physical properties in the olefin polymer resin coating material, low density polyethylene (LDPE), linear ethylene copolymers, or polypropylene (PP) can similarly be used to prepare grafted adhesive resins.

In the adhesive olefin polymer it has been found to be necessary to obtain, grafted or copolymerized, from about 0.0001 to about 10 weight percent of the acid or anhydride. It has been found preferable to obtain from about 0.01 to about 5 weight percent acid or anhydride groups based on the weight of the adhesive olefin polymer, more preferably from about 0.5 to about 3 weight percent.

Typically the adhesive olefin polymer having the succinic acid or anhydride groups along the polymer molecule backbone is then mixed with additional amounts of one or more other olefin polymers. The selection of the amount and type of additional olefin polymer(s) is again based upon the above considerations to achieve the desired combination of processability and physical properties which are desired to be obtained in the olefin polymer resin coating composition. The principal features of polypropylene (PP), low density polyethylene (LDPE), high density polyethylene (HDPE), and linear ethylene copolymer are well-known to practitioners in this art and are described, for example, in U.S. Patent No. 4,327,009. In general, any of these resins or other olefin copolymers can be employed as the additional olefin polymer(s) for use in this invention.

The linear ethylene copolymer may have a density in the range of from about 0.88 g/cc to about 0.935 g/cc, preferably from about 0.90 g/cc to about 0.925 g/cc. This includes the resins generally referred to in the art as linear low density polyethylene (LLDPE), ultra low density polyethylene (ULDPE) and linear medium density polyethylene (LMDPE). It is evident to practitioners of this art that the density will depend in large part on the particular alkene(s) used as comonomer(s) and on the amount of said alkene(s) incorporated into the copolymer. Preferably, at least one olefinically unsaturated alkene of from $C_3$-$C_{12}$, most preferably from $C_4$-$C_8$ is copolymerized with ethylene to make the linear ethylene polymer. 1-octene is the especially preferred alkene. The amount of said alkene may constitute from about 0.5% to about 35% by weight of the copolymer, preferably from about 1% to about 20%, most preferably from about 2% to about 15%.

The linear ethylene copolymer may have a melt flow value (MFV) in the range of from about 0.1 g/10 min to about 2000 g/10 min as measured in accordance with ASTM D-1238(E). Preferably the melt flow value is in the range of from about 0.5 g/10 min to about 120 g/10 min, more preferably from about 0.7 g/10 min to about 40 g/10 min. Practitioners of this art are aware that the melt flow value is inversely related to the molecular weight of the polymer.

The LDPE which can be employed in accordance with the present invention is characterized as having a melt flow value in the range of from about 0.5 g/10 min to about 120 g/10 min according to ASTM D-1238(E) and a density in the range of from about 0.90 g/cc to about 0.94 g/cc, preferably a MFV of from about 0.7 g/10 min to about 40 g/10 min and a density of from about 0.91 to about 0.93 g/cc.

The HDPE which is used in accordance with the present invention is characterized as having a melt flow value in the range of from about 0.1 g/10 min to about 500 g/10 min according to ASTM D-1238(E) and a density in the range of from about 0.94 g/cc to about 0.965 g/cc, preferably a MFV of from about 0.5 to about 150 g/10 min and a density of from about 0.945 to about 0.960 g/cc.

It has been found desirable to combine the adhesive olefin polymer with one or more of the additional olefin polymers, in weight ratios of from 0.5: 99.5 to 99.5:0.5, preferably from 3:97 to 50:50 and most preferably from 5:95 to 15:85. It has been found very advantageous to use LDPE, linear ethylene copolymer(s) or HDPE as an additional olefin polymer. Especially preferred is a coating composition comprising a maleic anhydride-grafted HDPE as adhesive and a linear medium density polyethylene (LMDPE) as additional polymer.

For application according to the present invention, the olefin polymer resin coating composition needs to be in particulate form, also referred to as powder or microgranule form. It has been found that when the adhesive polymer and additional olefin polymer have been selected to achieve good combinations of heat resistance and toughness, in order to achieve sufficient wetting of the heated steel pipe to be coated, the olefin polymer resin coating composition should have an average particle size of less than 0.5 millimeters, preferably less than 0.4 millimeters and most preferably 0.2 to 0.3 millimeters. Particle sizes of this order can be obtained using standard polymer grinding equipment. Such coating compositions may be prepared by any suitable method. One method of preparing such compositions is by dry-blending pellets of the adhesive polymer and the additional olefin polymer and optional additives. Then this mixture is extruded into pellets which subsequently are ground to the appropriate particle size.

According to the process of the present invention, the particulate olefin polymer resin coating composition is applied to a heated pipe surface. The necessary pipe preparation procedures are generally well-known to those knowledgeable in this area of technology. Typically, such cleaning procedures require grit blasting or some similar type of impact cleaning to remove all traces of prior coating materials, dirt, rust and the like which may be present. If needed chemical cleaning means can be applied to "degrease" and properly prepare the pipe surface. Also a chemical pretreatment can be performed, such as by treating the steel surface with a chrome-iron-silicon oxide barrier layer that improves the long term adhesion and corrosion resistance of the coating system. If desired, an epoxy primer can be preliminary applied to the pipe by spray coating or the like. Where an epoxy primer coating is used, the selection of such epoxy primer and the heating of the pipe will need to take into account the curing characteristics for the resin and the need to have the pipe surface at the proper temperature at the point in time when the particulate olefin polymer resin coating composition is applied. Though in one aspect of the invention it has been found that the epoxy primer coating of the pipe is not needed for providing excellent field coatings, in a preferred aspect, the particulate olefin polymer resin coating composition is applied over the primer layer. Examples of epoxy primers which may advantageously used in the present process are Eurokote 714.31 of Bitumes Spéciaux and epoxy primer D-1003 of Corrocoat.

Prior to or during application of the particulate olefin polymer resin coating composition the portion of the steel pipe which has been cleaned and is to be coated should be heated by any of the well-known steel pipe heating means. Where larger areas of pipe are required to be coated, an induction heating coil should preferably be used. In situations where smaller pipe areas such as a hole or defect in the mill coating need to be recoated, the pipe surface could be heated with a hot gas (preferably air) or other type of convection heating means. In case the coating composition is applied to an area bordered by an existing mill coating, also that portion of the existing mill coating to be overlapped by the field coating is preferably heat-plastified. Depending upon the particular olefin polymer resin composition which will be used and its heat plastifying properties, the pipe should be heated to a temperature of at least 100°C and preferably at least 200°C. The maximum temperature to which the pipe should be heated is dependent on the expoxy primer (if any) and olefin polymer resin coating composition being used and the existing mill coating, if any, adjacent to the areas that are currently being coated. In general the pipe can be heated to temperatures up to about 260°C for the practice of the present invention. Regarding the minimum temperature, it should be noted that insufficient heating (i.e., too low of a pipe temperature) will result in poor melting of the applied olefin polymer resin coating composition and poor wetting of the substrate surface.

The application of the particulate olefin polymer resin coating composition can be accomplished in any of several ways. In the situation wherein an epoxy primer coating is initially applied, the olefin polymer resin coating material is preferably applied in the same fashion and before the epoxy primer is fully cured. For example, a fluidizing device and application means, such as normally used for applying an epoxy primer coating, can be used to first apply such epoxy primer coat and then to apply a subsequent coating of the particulate olefin polymer resin. Preferably the application means is mounted on the pipe and has a dispensing head that rotates around the circumference of the pipe and dispenses the fluidized particulate olefin polymer resin coating composition in circular or spiral pattern. Other olefin polymer resin application means are possible.

During the application of the olefin polymer resin coating material, some of the pipe heat will be used to cure the epoxy primer and melt the olefin polymer coating composition. In a preferred embodiment of the present invention, additional heat is provided during at least part, preferably all of the particulate olefin polymer resin application by a supplemental source of flowing hot air at a temperature above the melting temperature of the resin. Most preferably the hot air source is associated with the application means which is applying the particulate olefin polymer resin and applied simultaneously. It is also preferable if the air which is used for fluidized particulate transport is heated to an elevated temperature, preferably a temperature somewhat lower than the softening temperature of the particulate olefin polymer resin. This is advantageous as it reduces as much as possible air encapsulation in the coating.

In this way a coating of the olefin polymer resin coating material is applied to the pipe. The coating can generally be applied according to applicable coating specifications. Generally the material should be applied to achieve coating thicknesses of from 0.01 millimeters up to 7 millimeters. It is not necessary, according to the present invention, that further external layers are applied. Preferably the coating thickness is in the range 0.1 millimeter to 5 millimeters and most preferably it is in the range of 1 to 3 millimeters. The coating thickness will obviously be selected to correspond to the thickness of any mill coatings which are adjacent and the coating material applied in a way that a smooth overlap with any existing mill coating is obtained. It should also be noted that some portions of the pipe surface may be somewhat raised, such as where joints or seams are welded. The overall coating thickness or at least the localized coating thickness in such areas should be adjusted accordingly in order to achieve the necessary coating thickness in the direction directly perpendicular to the seam along the whole length of the seam. In the practice of the present invention where girth welded pipes are being coated, the applied coating material surprisingly, without further shaping or forming steps, provides a very smooth, shiny coating surface and overlap with the existing mill coating. A slight surplus of coating material is formed in the area around the welded seam. In general, applicable coating specifications will prescribe the necessary coating thicknesses and the amount of overlap with any existing mill coating. Generally from 2 to 20 centimeters overlap with the existing coating is made with 2 to 10 centimeters usually being sufficient.

The particulate olefin polymer resin coating material can also advantageously contain stabilizers and additives of the known types such as antioxidants, U.V. radiation absorbers, pigments, rust inhibitors, fillers and flame retardants. Carbon black is one of the preferred additives.

Field pipe coatings applied as described above are found to provide surprisingly improved performance and can unexpectedly be obtained via a simplified application procedure as compared to the field coatings that are currently known or suggested for use. In particular, the field coatings have surprising combinations of adhesive strength, resistance to cathodic disbonding, chemical and moisture resistance, physical strength, and high potential service temperature. The coating process surprisingly reduces the time and labor required for the field coating process and provides uniformly excellent coatings over extended lengths and/or for large numbers of individually coated areas.

Although not intending to limit the scope of the present invention, the following examples will be used for the purposes of illustration.

Example I - Adhesive Olefin Polymer Preparation

According to the process described in U.S. Patent 4,684,576, there were prepared adhesive olefin polymers having succinic anhydride groups as are further identified below in Table I. In the preparation process, the "base" polymer is extruded with maleic anhydride (2 weight percent based on weight of base polymer) and dicumyl peroxyde (0.1 weight percent based on weight base polymer) at an average melt temperature of 225°C (within a range of 180 to 250°C). A Werner-Pfleiderer twin screw devolatilizing extruder was used. The final concentration of maleic anhydride which was incorporated into the adhesive polymer (MA Conc) was determined by titration to be 1.2 percent by weight based on the final adhesive polymer resin weight.

Table I

| Adhesive Olefin Polymers | | | | |
|---|---|---|---|---|
| Expt No | Base Polymer | | Grafted Adhesive Polymer | |
| | Type | Density (g/cc) | MFV (g/10 min) | MA Conc | MFV (g/10 min) |
| 1 | HDPE | 0.962 | 10 | 1.2 | 0.1 |

Example II - Preparation of the Particulate Olefin Polymer Resin Coating Composition

The adhesive olefin polymer resin prepared above and described in Table I are then combined with additional amounts of other olefin polymer resins to prepare the specific particulate olefin polymer resin coating compositions evaluated below. Table II below shows the amount and type of additional olefin polymer which is added and the physical properties of the resulting coating composition. The resultant particulate olefin polymer resin coating compositions had average particle sizes of about 0.25 to 0.30 millimeters.

6

Table II

| Coating Composition Preparation | | | |
|---|---|---|---|
| Expt No. | 2 | 3 | 4 |
| Adhesive Polymer Amt. (wt %) | 10 | 10 | 10 |
| Additional Olefin Polymer | | | |
| Type<br>Density (g/cc)<br>MFV (g/10 min)<br>Amt (wt %) | LDPE<br>0.923<br>4<br>89 | LEOC[3]<br>0.938<br>5.6<br>89 | LEOC[3]<br>0.938<br>5.6<br>84 |
| Other | | | |
| Stabilizer Concentrate[1] (wt.%)<br>Stabilizer Concentrate[2] (wt.%) | 1<br>- | 1<br>- | -<br>6 |
| Coating Composition | | | |
| Apparent Density (g/cc)<br>MFV (g/10 min) | 0.925<br>3 | 0.940<br>4 | 0.948<br>1.5 |
| Avg. Part. Size (mm) | 0.25 to 0.30 | | |

1. Contains 4 percent Irganox 1010 brand primary antioxidant stabilizer, 8 percent Irgafos 168 brand secondary antioxidant stabilizer and the balance HDPE. Irganox and Irgafos are registered trademarks of Ciba-Geigy.
2. Contains 40 percent Carbon Black Vulcan P (Trademark of Cabot Plastics), 1.2 % Irganox 1076 brand primary antioxidant stabilizer and 1.2 % Santonox R brand secondary antioxidant stabilizer and the balance LLDPE. Santonox is a tr demark of Monsanto Co.
3. Linear Ethylene-Octene Copolymer

Example III - Coating of Steel Pipe

Carbon steel pipe was initially prepared for coating by grit blasting until "near white metal" was obtained. The area of pipe to be coated was then heated with a gas flame (for Experiments 4-7) and with an electrical induction heating coil (Experiments 8 and 9), respectively, to a temperature of about 210 to 230° C.

As summarized below in Table III an epoxy resin primer coating approximately 0.05 mm thick was electrostatically applied for Experiments 4, 6 and 8 when the pipe was at this temperature. To the heated pipes of Experiments 4 through 7 (during the curing periods of the epoxy resin primer coatings of Experiments 4 and 6) the indicated particulate olefin polymer resin coating compositions were applied by sprinkling from a trough positioned directly above the pipe while the pipe was rotated. During the resin application the pipe temperature falls slightly. In this fashion a coating having a thickness of 0.2 to 0.3 mm was applied. After coating with the indicated particulate olefin polymer resin coating composition a further coating of the linear ethylene-octene copolymer used in Experiment 3 was applied by extrusion to form an additional 2.5 to 3 mm thick external coating. While assisting in the testing procedure of the adhesion properties of the coatings obtained according to the process claimed herein, such an additional external coating is not essential to the claimed invention and similarly good results are observed without it. For Experiments 8 and 9 the coating compositions are applied in a stream of hot air by an application device rotating back and forth around the circumference of the area to be coated, while supplying additional heat by means of a hot air steam, until a layer thickness of 3 mm is obtained. The results observed in testing the coated pipes are reported below. In the comparative Experiment A (which is not an example of the present invention) one of the most commonly recommended shrinkable sleeve field coatings was tested. It was applied directly to the similarly cleaned steel pipe in accordance with the manufacturer's instructions. The sleeve material is believed to be a mono-directional oriented, semi-crosslinked polyethylene with a soft butylene-type adhesive layer.

The adhesion test was performed according to DIN 30670 where the peeling strength in Newtons per 5 centimeter (N/5 cm) is determined. For ambient temperature testing a strip 5 cm wide was cut down to the metal along the circumference of the pipe. Weights were attached to the strip to produce a 90° peel angle and the adhesion was determined by measuring the force (amount of weight) required to further peel the strip. At temperatures of 60°C and higher, an Instron tension testing apparatus (trademark of Instron Co., U.S.A.) was used at a peeling rate of 50 millimeters per minute with a peeling angle of 90°. A strip 2.5 cm wide was cut down to the metal surface and peeled partially away by hand. This was then mounted in the Instron and at the indicated temperatures, the tensile force measured while 2 to 3 inches were peeled. The average of five peeling tests is given as the adhesive strength.

Table III

| Coating of Steel Pipe | | | | | | | |
|---|---|---|---|---|---|---|---|
| Expt. No. | A[1] | 4 | 5 | 6 | 7 | 8 | 9 |
| Primer | | | | | | | |
| Type | none | epoxy | none | epoxy | none | epoxy | none |
| Thickness (mm) | - | 0.05 | - | 0.05 | - | 0.1 | - |
| Coating Composition | | | | | | | |
| Type[2] | sleeve | 2 | 2 | 3 | 3 | 4 | 4 |
| Thickness (mm) | 1 to 2 | 0.2 to 0.3 | | | | 3 | 3 |
| Thickness Outermost Layer(mm) | none | 2.5 to 3 | | | | none | none |
| Pipe Temp (°C) | - | 210 to 230 | | | | | |
| Adhesion (N/5cm) | | | | | | | |
| Room temp | 300-400 | CF[3] | 700 | CF[3] | 800 | CF[3] | CF[3] |
| 50°C | 180-200 | - | - | - | - | - | - |
| 60°C | - | 350 | 135 | 460 | 260 | - | - |
| 90°C | - | 150 | 40 | 250 | 150 | - | - |

[1] Comparative experiment, not an example of the present invention.
[2] Corresponds to Expt No. in Table II unless otherwise shown.
[3] Adhesive polymer failed cohesively, i.e., the adhesive strength exceeded the polymer tensile strength.

As can be seen in Table III above, the coating process according to the present invention provides unexpectedly superior field pipe coatings. At higher temperatures the adhesive strength is maintained especially well and particularly in Experiments 6 - 9 where the coating composition used an additional olefin polymer having a higher heat softening point (a linear medium density copolymer of ethylene and 1-octene). These results are especially surprising in view of the application advantages observed in using the process according to the invention. It has been found that it typically takes about 20 minutes to apply one of the heat shrinkable sleeves to a girth welded pipe joint. On the other hand, applying either a two layer (epoxy primer plus particulate olefin polymer resin coating composition) or a one layer (only particulate olefin polymer resin coating composition) field coating with a fluidization application system to the same type and size of a weld joint requires about 6 minutes. The 14 minute time reduction (70 percent) becomes very important when the rate of pipeline laying is controlled by the rate of joint welding and coating.

It should also be noted that with an optimized field coating apparatus, according to the present invention the labor requirement for the field coating process is simultaneously reduced. For example, 30 workers are typically able to apply 120 girth weld joint coatings in 10 hours for a 42 inch diameter pipeline. The same number of joints can be coated in the same time period with a one or two layer coating according to the presently claimed process by 6 workers, an 80 percent labor savings.

**Claims**

1. A process for field coating pipe by applying a thermoplastic resin to the exterior of a pipe to form a coating, characterized in that as thermoplastic resin a particulate olefin polymer resin coating composition comprising an adhesive olefin polymer having succinic acid or anhydride groups along the adhesive olefin polymer molecule backbone, is applied to the heated pipe.

2. The process according to Claim 1 wherein the coating composition is applied to an area bordered by an existing pipe coating.

3. The process according to Claim 2 wherein the existing pipe coating comprises a layer of a thermoplastic olefin polymer resin.

4. The process according to any of the Claims 1 to 3 wherein the area to which the coating composition is applied comprises a welded joint.

5. The process according to any of the Claims 1 to 4 wherein the coating composition is at least partially applied simultaneously with a flow of heated gas.

6. The process according to Claim 5 wherein the coating composition is applied as a fluidized flow.

7. The process according to any of the Claims 1 to 6 wherein the particulate coating composition is applied directly to a pipe surface.

8. The process according to any of the Claims 1 to 6 wherein a primer layer is applied directly to a surface of the pipe and the particulate coating composition is applied over the primer layer.

9. The process according to Claim 8 wherein the primer layer is an epoxy primer and the particulate coating composition is applied before the epoxy primer is fully cured.

10. A field pipe coating prepared according to the processes of any of Claims 1 through 9.

11. A pipe coated according to the processes of any of Claims 1 through 9.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 5) |
|---|---|---|---|
| X | FR-A-2 421 936 (MITSUI PETROCHEMICAL INDUSTRIES) <br> * Claim 1; page 1, line 31 - page 2, line 9 * | 1-11 | B 05 D 7/20 <br> C 08 L 51/06 <br> F 16 L 58/10 |
| X | US-E- 30 006 (S. SAKAYORI et al.) <br> * Abstract; column 2, lines 45-62; column 5, lines 1-16 * | 1-11 | |
| A | FR-A-2 251 611 (EASTMAN KODAK) <br> * Page 1, lines 1-4; claims 1,4,6 * | 1 | |
| A | LU-A- 50 202 (HOECHST) <br> * Claim 1; page 3, lines 18-26 * | 1 | |
| A | FR-A-1 538 767 (THE DOW CHEMICAL) <br> * Page 1, left-hand column, lines 13-24 * | 1 | |

TECHNICAL FIELDS SEARCHED (Int. Cl.5)

B 05 D
C 08 L
F 16 L
C 09 D

The present search report has been drawn up for all claims

| Place of search | Date of completion of the search | Examiner |
|---|---|---|
| THE HAGUE | 26-01-1990 | GOOVAERTS R.E. |